(19) Europäisches Patentamt
European Patent Office
Office européen des brevets

(11) **EP 2 930 869 A1**

(12) **EUROPEAN PATENT APPLICATION**

(43) Date of publication:
**14.10.2015 Bulletin 2015/42**

(51) Int Cl.:
**H04J 14/02** *(2006.01)* **H04B 10/079** *(2013.01)*

(21) Application number: **14305514.3**

(22) Date of filing: **08.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Morea, Annalisa**
**91620 Nozay (FR)**

• **Rival, Olivier**
**91620 Npzay (FR)**

(74) Representative: **Loyer & Abello**
**9, rue Anatole de la Forge**
**75017 Paris (FR)**

Remarks:
Amended claims in accordance with Rule 137(2) EPC.

(54) **Setting the power of a plurality of optical signals in an optical network**

(57)    A method for setting the power of a plurality of optical signals (25, 26, 27, 28, 29) in an optical network (99), including:

allocating an initial power value (23) for each optical signal of the plurality of optical signals,

selecting a first optical signal (25),

estimating an error parameter of the selected optical signal at the destination node (C) of the selected optical signal by assuming a lowered power value of the selected optical signal,

updating the power value of the selected optical signal to the lowered power value when the estimated error parameter meets an acceptance condition, and

selecting a second signal (26), and iterating to the step of estimating, and

after at least the first and second optical signals have been selected, setting the power of each respective optical signal to match the corresponding updated power value.

FIG.3

## Description

## Field of the invention

The invention relates to the technical field of optical communication systems, in particular methods and systems for setting the power of a plurality of optical signals in an optical network that may be employed for network sizing and/or provisioning.

## Background

Transparent mesh networks are networks with optical bypass of intermediate nodes whenever posible, and no regenerators whenever possible. A regenerator is an Optical/Electrical/Optical device that is a kind of repeater to help an optical signal to continue its journey successfully when the signal becomes weaker and distorted after having travelled through a significant distance. Indeed, optical Signals are degraded while propagating in the optical medium due to physical effects and this degradation may be measured by the Bit-Error-Rate. The Bit-Error-Rate is the ratio of bits arriving at destination node that are not the one emitted by the source node on the total number of emitted bits. Physical degradations depend on a plurality of factors, such as the distance to propagate over, the characteristics of the optical links, the frequency occupation, etc. It is preferable to limit as far as possible the number of regenerators in an optical network as they are energy-greedy and costly.

## Summary

In an embodiment, the invention provides a method for setting the power of a plurality of optical signals in an optical network, wherein each optical signal has a source node, a destination node, and an optical path from the source node to the destination node, wherein

the optical paths of the optical signals are non-disjoint paths, wherein the optical signals are multiplexed in the non-disjoint paths, the method including:

> providing a dataset indicating optical path properties of the optical signals,
> allocating an initial power value for each optical signal of the plurality of optical signals,
> selecting a first optical signal,
> estimating an error parameter of the selected optical signal at the destination node of the selected optical signal by assuming a lowered power value of the selected optical signal, wherein the estimating comprises performing propagation calculation by a propagation model that considers nonlinear interactions, optionally with also linear interactions, between optical signals, wherein the propagation calculation deals with the transparent transmission of the plurality of optical signals along their optical paths from the source nodes to the destination nodes as a function of the optical path properties of the optical signals,
allocating the lowered power value to the selected optical signal in an updating step when the estimated error parameter meets an acceptance condition,
selecting a second signal, and iterating to the step of estimating, and
after at least the first and second optical signals have been selected, setting the power of each respective optical signal to match the up-to-date allocated power value.

According to embodiments, such a method can comprise one or more of the features below.
The optical signals may be multiplexed in accordance with any multiplexing method, e.g. WDM-multiplexed and/or spatially-multiplexed and/or polarization-multiplexed. Preferably the optical network is a WDM network and the first and second optical signals have respective wavelength channels.
There are many ways of defining a suitable acceptance condition. In an embodiment, the acceptance condition is met when the estimated error parameter is lower than a threshold error parameter.
There are many suitable ways of determining the initial power value. In general, the initial power value should be selected equal or below a nonlinear threshold power. In an embodiment, the method further comprises the step of determining the initial power value by

selecting the optical signal of the plurality of optical signals that has the longest optical path in the network, and for a set of power values,

estimating an error parameter of the selected optical signal at the destination node of said selected optical signal by performing propagation calculation by a propagation model that considers nonlinear interactions between optical signals, wherein the propagation calculation deals with the transparent transmission of the plurality of optical signals along their optical paths from the source nodes to the destination nodes, under the assumption that each optical signal of the plurality of optical signals has an identical power value P

comparing the lowest value of the estimated error parameter to the threshold error parameter

when the lowest value of the estimated error parameter is lower than or equal to the threshold error parameter, selecting the power value associated to the lowest error parameter, and

in the other case, repeating the determination step by selecting the optical signal of the plurality of optical signals that has an optical path length shorter than the optical path length of the previously selected optical signal.

In an embodiment, the method further comprises the step of selecting another optical signal and iterating to the step of estimating until all optical signals have been successively selected in the step of selecting, and wherein the setting of the power is done after all signals have been successively selected.

In an embodiment, the method further comprises:

iterating to the step of selecting the first optical signal, and

after having selected each optical signal of the plurality of optical signals, testing a convergence criterion of the power values, and,

setting the power of the optical signal to match the updated power values obtained at the last iteration when the convergence criterion is fulfilled.

In an embodiment, the optical signals other than the selected optical signal are taken into account in the propagation calculation with a power value equal to the updated power value obtained at a current iteration.

In an embodiment, the optical signals other than the selected optical signal are taken into account in the propagation calculation with a power value equal to the updated power value obtained at a previous iteration.

There are many sorts of propagation models that may be employed. In an embodiment the propagation model is a semi-empirical model. In an embodiment the propagation model is an analytical model.

There are many suitable parameters for the error parameter. In an embodiment the error parameter is the Bit-Error-Rate. In an embodiment the error parameter is a quality factor Q. In an embodiment the propagation model considers one or more of the sources of impairments of the plurality of optical signals below:

spontaneous emission, the Kerr effect, any kind of linear effect, any kind of nonlinear effect, dispersion of the waveguide, attenuation of the waveguide, distortion, and any kind of noise of any device of the network.

- In an embodiment, the method further comprises: detecting that the estimated error parameter of an optical signal of the plurality of optical signals does not meet the acceptance condition and inserting a regenerator on the path of said optical signal.

There are many parameters that may be employed as input data for the propagation calculation of the optical signals, which are referred to as optical path parameters in the present specification. The optical path parameters may be selected in the list below parameters of the network topology, parameters of the source node and the destination node, number of nodes along the optical path, node positions, transponder types, fiber length, optical path length, fiber type, fiber modes, fiber refractive index, frequency occupation of the fibers, number of filters on the optical path, design of Arrayed Waveguide Gratings and others.

Some of the intrinsic features of the optical signal may also be taken into account as optical path properties for the propagation calculation: multiplexing type, carrier frequency, modulation format and others. In addition the propagation model necessarily takes into account the amplitude or power of optical signals.

Features of light emitting devices may also be taken into account as optical path properties for the propagation calculation and may be selected in the list below: chirp, emitting modes, emitting frequency, emitting spectral bandwidth, jitter and others.

Features of detectors may also be taken into account as optical path properties for the propagation calculation and may be selected in the list below: sensitivity, photodetection noise, shot noise, thermal noise, noise intrinsic to avalanche photodiodes and others.

In an embodiment, the invention also provides a device for computing the power values for a plurality of optical signals in a network, suitable for a network wherein each optical signal has a source node, a destination node, and an optical path from the source node to the destination node, wherein the optical paths of the optical signals are non-disjoint paths, wherein the first and second optical signals are multiplexed in the shared optical link, the device comprising a data repository storing optical path properties of the optical signals and computation means adapted to perform:

allocating an initial power value for each optical signal of the plurality of optical signals,

selecting a first optical signal,

estimating an error parameter of the selected optical signal at the destination node of the selected optical signal by assuming a lowered power value of the selected optical signal, wherein the estimating comprises performing propagation calculation by a propagation model that considers nonlinear interactions between optical signals, wherein the propagation calculation deals with the transparent transmission of the plurality of optical signals along their optical paths from the source nodes to the destination nodes as a function of optical path properties of the optical signals,

allocating the lowered power value to the selected optical signal in an updating step when the estimated error parameter meets an acceptance condition, and selecting a second signal, and iterating to the step of estimating,

the device further comprising an output interface for providing the up-to-date allocated power value of each optical signal.

The output interface may be implemented in diverse manners. In an embodiment, the output interface provides a user with the up-to-date power values in a suitable format for the use in a network design, e.g. as a computer file or a paper printout. In an embodiment, the output interface is connected to a network controller adapted for setting the power of laser sources intended to generate each respective optical signal to match the up-to-date allocated power value provided by the output interface.

Aspects of the invention are based on the idea of setting the power in a network on a signal by signal basis so as to limit the number of required regenerators in an optical network.

Aspects of the invention are based on the idea of adjusting the power values of a the plurality of signals of the optical network to exactly what is needed for reaching destination in a transparent manner at an acceptable quality level.

Aspects of the invention stem for the observation that the power value to allocate to each signal of the network may be overestimated when a uniform power allocation is employed.

**Brief description of the drawings**

These and other aspects of the invention will be apparent from and elucidated with reference to the embodiments described hereinafter, by way of example, with reference to the drawings.

Figure 1 is a flow chart showing an iterative simulation method that carries out the calculation of the power of a set of optical signals.

Figure 2 is a schematic graph of the bit-error rate of an optical signal at a destination point of the optical signal, as a function of the power allocated to the optical signal, for a set of optical signals that propagate along different distances.

Figure 3 is a schematic representation of the spectrum and power allocation in an optical network of five nodes in a plurality of scenarii, including a worst-case planning state, an initialization state and a state after iterations through the power calculation method of Fig.1.

Figure 4 is a schematic graph of the bit-error rate of an optical signal at a destination point of the optical signal, as a function of the power allocated to the optical signal, for two multiplexed optical signals that propagate in an optical link along two different distances, showing the effect of the iterations carried out in the method of Fig.1 on the minimum level of the graphs.

Figure 5 is a functional drawing of a computing device that may be employed for computing the power of a set of optical signals.

**Detailed description of the embodiments**

In an illustrative embodiment, a WDM optical network carries 100Gb/s per wavelength on uncompensated links, i.e. without chromatic dispersion compensation between fiber spans. In an example, the network must carry a plurality of N 100Gb/s demands, the 100Gb/s payload being transported over 112Gb/s Polarization Division Multiplexed Quaternary Phase Shift Keying wavelengths.

It is well known that for such systems, the mains sources of impairments are the Amplified Spontaneous Emission (ASE) noise and the distortions due to the Kerr Effect. Both effects can be modeled extremely accurately by additive white Gaussian noise and the BER is a modulation-format-dependent function of a total signal-to-noise ratio at the receiver defined by:

$$SNR = \frac{P}{P_{ASE} + P_{NL}} \qquad\qquad Eq(1)$$

where P is the power of the signal, $P_{ASE}$ the power of the ASE noise measured in a reference bandwidth (e.g. 0.1nm as for the traditional definition of OSNR) and $P_{NL}$ the power of nonlinear distortions.

$P_{ASE}$ depends on the distance traveled by the signal and specifically on the number of traversed optical amplifiers and their characteristics.

$P_{NL}$ depends also on the traveled distance as well as the optical power of the signal under consideration as well as the power of all other signals co-propagating through the same links.

Hence, the choice of optical power has a very strong impact on the Bit Error Rate (BER) of the signal at the receiver. Indeed, the higher the power, the better the signal is tolerant to the accumulation of Amplified Spontaneous Emission along the path. Conversely the lower the power, the lower the degradations due to the Kerr effect are. As a consequence, some sort of trade-off power must be found to minimize BER. In addition of those respectively linear and nonlinear effects that strongly degrade the signal respectively for low and for high allocated power values, the distance to propagate over also increases the signal degradation, hence the BER.

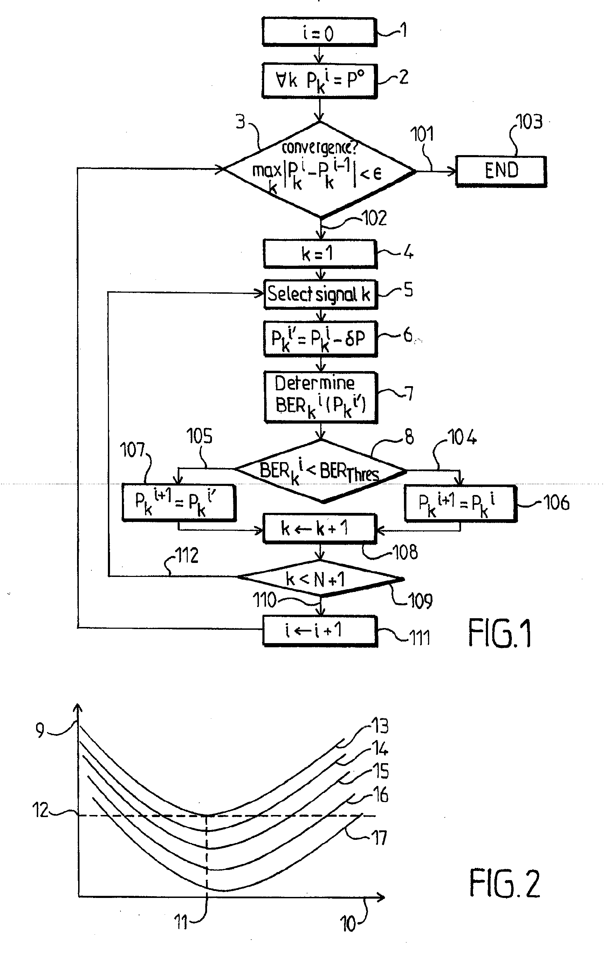

With reference to Figure 2, the above described tendencies are illustrated.

The graph 13 shows the bit-error-rate 9 of an optical signal as a function of the corresponding allocated power 10 for propagation over a chosen distance, i.e. 2000 km. Graph 13 presents a minimum 12 that is the power trade-off between those linear and nonlinear effects. This minimum BER 12 can be obtained for the allocation of a power value called "nonlinear threshold power" 11 that corresponds to the abscissa of the minimum of the graph 13. For any lower distance to propagate over, the BER vs Power graph presents a similar shape, with a lower BER and a minimum that is close to the "nonlinear threshold power" and slightly shifted to the higher values of power. To illustrate this, four others graphs 14, 15, 16, and 17 have been represented to show the bit-error-rate 9 of optical signal as a function of the corresponding allocated power 10 and propagation distances: namely 1500 km for graph 14, 1000 km for graph 15, 500 km for graph 16, 200km for graph 17. The five graphs have been simulated in the case where an optical signal propagates transparently alone along its path from its source node to its destination node.

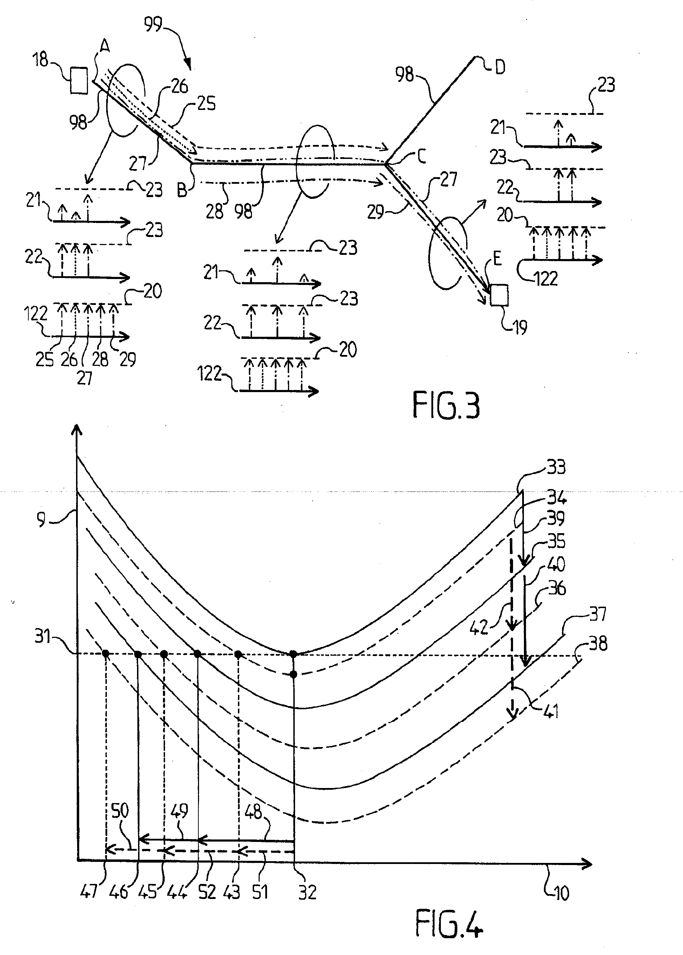

When several multiplexed optical signals propagate through the networks, as is almost always the case, finding the optimal trade-off power is further complicated by so-called "inter-channel" effects: The Kerr-effect distortions experienced by a given optical signal $k$ does not depend only on the power $P_k$ of the signal $k$ but also on the power $P_{k'}$ of all other signals k' sharing a link with signal $k$, where k is an index that denotes different signals, e.g. signals 25 to 29 in Fig. 3. There are many ways of numbering the signals. The signals can be numbered by increasing or decreasing distance to reach, or they can be numbered by increasing or decreasing frequency or by increasing or decreasing appearance order on the grid or by any other way. They also can be arbitrary number. An acceptable BER threshold is defined to set a limit for the degradation of the signal at the receiver. This limit may be for example a standard of the optical telecommunication field. This limit can for example depend on the Forward Error Correction deployed in the system.

For the sake of simplicity, one could think of assigning a common power to all signals in the network and choosing this power to cover the longest distance that can be bridged while guaranteeing BER<BER$_{Thres}$, of the worst channel in a fully-loaded point-to-point transmission system. However, such a worst-case assumption is obviously suboptimal. In Fig.3, the spectrum 122 illustrates a worst-case assumption. In particular, assuming that a given channel could experience the worst-case distortion from cross-channel effects as assumed in the fully occupied spectrum 122 results in an over-estimation of the cross-channel distortions, therefore in an overestimation of the BER and therefore in an overestimation of the number of required regeneration resources. As well, assuming that all signals are transported from a common source node to the furthest destination node results in that all shorter connection operate with higher optical power than they need to meet the BER threshold. Equivalently, these connections can be seen as operating with too high BER margins. These higher than necessary power settings cause higher than necessary amounts of inter-channel nonlinear distortions and in turn require the deployment of more regenerators than necessary. While this method has the benefit of simplicity and robustness (i.e. all connections shorter than the reach are automatically feasible and adding new connections does not endanger existing ones), it is costly and energy-greedy.

With reference to Figure 3, a WDM optical network 99 is schematically illustrated.

The optical network comprises five nodes denoted A to E connected by optical links 98 e.g. optical fibers. The optical nodes are transparent switching nodes that pass transit traffic without Optical/Electrical/Optical conversion. There is an emitter 18 at node A and a receiver 19 at node E. The longest distance that can be bridged in the optical network 99 is the distance between the emitter 18 and the receiver 19, corresponding respectively to the nodes A and E. Five optical signals propagate transparently through the network: The optical signal 25 propagates from node A to node C. The optical signal 26 propagates from node A to node B. The optical signal 27 propagates from node A to node E. The optical signal 28 propagates from node B to node C. The optical signal 27 propagates from node A to node E. The optical signal 29 propagates from node C to node E. The spectrum supported by the link between the nodes A and B is represented in three scenarii. The spectrum 122 is a worst-case planning spectrum. The spectrum 22 is an initialization spectrum that will be described further below, and the spectrum 21 is a spectrum after iterations through a power calculation method that will be described below. Spectra supported by the links between the nodes B and C and respectively between the nodes C and E have been represented according to the same scenarii. Each arrow on the spectra represents a frequency defined by its longitudinal position and a power value defined by its length. The power level 20 in the worst-case assumption is the same for each optical signal propagating through the network in the worst-case assumption. An initializing power level 23 is represented on spectra 22 and 21.

A method for the allocation of power in the transparent mesh network 99 will now be described. In this method, two things differ from the worst case assumption discussed above. The spectrum 22 of each fiber is only partially occupied and only a fraction of signals 27 is transported over the maximum distance from node A to node E.

In the method for allocating power in mesh network 99, the optical power is allocated to a signal, say signal 25 according to the individual characteristics of the signal. These characteristics are in particular the distance it needs to propagate over, i.e. from its source node, say node A to its destination node, say node C, and its relation to other signals, say signals (26, 27, and 28) co-propagating through the network. The signal 25 interacts with signals 26 and 27 on the part of the path from node A to node B. The signal 25 interacts with signals 28 and 27 on the part of the path from node B to node C.

With reference to Figure 3 and Figure 4, the iterative method for setting the power will be further described in relation with two signals for the sake of clarity.

Figure 4 shows a graph of the bit-error rate 9 of an optical signal at the destination point of the optical signal, as a function of the power 10 allocated to the optical signal.

The signals dealt with in Fig.4 are signals 25 and 26 of Figure 3. Initially, an equal initializing power level 23 is first allocated to both signals of the network. For example, this equal power level is taken as the abscissa of the minimum of graph 33 of Figure 4. For example, the associated ordinate BER 31 may be chosen to define a BER threshold denoted by $BER_{Thres}$.

The BER of both signals 25 and 26 is then evaluated by a numerical method taking into account the individual characteristics of the signals and their respective paths, in particular the path length, the relation to other co-propagating signals, in particular the nonlinear impairments caused by other signals and characteristics of the network, in particular network topology, fiber types and transponders types The numerical method can be executed by for example a network planning tool for static networks or a path computation engine (PCE) for dynamic networks.

Graph 33 of Figure 4, in solid line, corresponds to a numerical simulation of the BER versus the power of signal 25 of Figure 3. Graph 34 of Figure 4, in dashed line, corresponds to a numerical simulation of the BER versus the power of signal 26 of Figure 3. The numerical simulations are made with the assumption that co-propagating signals 26, 27 and 28 interact with signal 25 where they are present. Each BER ordinate in graph 33 is simulated for signal 25 by assuming the same power level, for all the co-propagating signals 26, 27 and 28 as the power level of signal 25.

The graphs 33 to 38 of Figure 4 show the effect of the iteratively lowering power of each signal

The power of connections with low BER, for example below a given threshold $BER_{Thres}$, is empirically lowered progressively. For example both signals 25 and 26 are in this case while choosing a $BER_{Thres}$ equal to BER 31.

When the power of a given signal, let us say signal 26 is lowered, its BER generally increases and therefore becomes closer to $BER_{Thres}$. The effect of this reduction in power is however beneficial for all connections sharing a link with signal 26 as it reduces the amount of cross-channel distortions generated by signal 26. This improvement is all the more pronounced on signals that are spectrally close from *the lowered* signal 26, i.e. signals 25 and 27 because cross-channel distortions decrease as frequency of signal channel spacing increases. This improvement is also more pronounced on signals that share a large number of links with the lowered signal e.g. signal 28 that share the links from node A to node B and from node B to node C with signal 25.

A sequence of successive power lowering steps is represented on Figure 4. Graphs 35 to 38 are plotted after having assumed the successively lowering of the power of the other signal. Power lowering steps 48 and then lowering 49 are represented by solid line arrows translating the chosen power abscissa 32 to 44 and 46 for optical signal 25. The BER of signal 25 versus Power is represented successively by the graphs in solid lines 33, 35 and 37. Power lowering steps 51, 52 and 50 are represented by dashed line arrows translating successively the chosen power abscissa 32 to 43, 45 and 47 for optical signal 26. The BER of signal 26 versus Power is represented successively by the graphs 34, 36 and 38 in dashed lines.

At each iteration, if possible in view of remaining BER margins, the power of the signal is chosen to be lowered and then the BER of the other signal automatically lowers.

With reference to Figure 3 and Figure 4 the successive power lowering steps are further described. Lowering step 51 of the power 32 of the optical signal 26 reduces the impairments due to the influence of the optical signal 26 on the optical signal 25. Hence the BER of the optical signal 25 is lowered. This BER lowering is represented by solid line arrow 39. It makes then possible to lower the power of the optical signal 25 as shown by step 48. As the power of the optical signal 25 has been lowered, the BER of the optical signal 26 is automatically lowered as shown by arrow 42. It makes it then possible to lower the power of the optical signal 26, as shown by step 52. This power lowering has the consequence to lower the BER of the optical signal 25, as shown by arrow 40. That BER lowering makes possible to lower the power of the signal 25. This Power lowering step 49 has the consequence to lower the BER of the optical signal 26, as shown by arrow 41. That BER lowering makes it possible to lower the power of the optical signal as shown by step 50 and so on.

An advantage of the iterative method outlined above will be described in reference to signal 27 of Fig.3.

If signal 27 was provided with the initializing power level 23, then the BER of signal 27 would always be higher than the threshold $BER_{Thres}$ as it propagates over a longer distance than signal 25. It is equivalent to say that signal 27 cannot reach transparently the receiver 19 at the initializing step. A remedy would consist in placing a regenerator at node C to allow signal 27 to reach receiver 19 while guarantying $BER_{Thres}$. However, reducing the power of multiplexed signals 25 and 26 with initially high margins (i.e. low BER) therefore reduces the impairments on the signal 27 that was initially deemed infeasible in a transparent manner and may bring this signal below the BER feasibility threshold thereby removing the need for regeneration. Namely, in the initialization spectrum represented by the spectrum 22 in Fig.3, signal 27 is still too degraded to reach destination transparently. But as a result of the iterative power lowering steps described above, an individualized power spectrum is obtained with lowered values represented on the spectrum 21, so that the BER threshold can be satisfied for the signal 27.

The iterative power reduction process that has been described above in relation with two signals may be carried out for any number of multiplexed optical signals in a network.

Once the iterative power reduction process has been carried out the BER estimation for all signals in a network is either $BER_{Thres}$ or above.

In the above description we have introduced a BER threshold $BER_{Thres}$ for network resilience purposes. If the power reduction process was carried out until all connections approached $BER_{Thres}$, small fluctuations in the power settings or the addition of a small number of new connections (network upgrade) may increase the BER beyond $BER_{Thres}$ and render some connections unfeasible. To prevent that the user can choose a lower $BER_{Thres}$ to have a larger margin.

With reference to Figure 1, the proposed numerical method for allocating power to N optical signals numerated from 1 to N will now be explained. This method may comprise two loops: one denoted by index i to increment a repetitive process and one denoted by index k to select the N signals in turn and to process BER calculations for these signals one by one. The method goes through the following steps:

Firstly, a BER threshold is set, and a path and a wavelength are assigned to generate a respective optical signal for each connection demand in the network. The method further goes on with step 1.

In step 1 the incremental loop is initialized by setting i=0. The method further goes on with step 2.

In step 2, the power value $P_k^1$ of each optical signal k of the plurality of optical signals from 1 to N is set to an initialization power value $P°$ chosen to allow one optical signal j of the plurality of optical signals to travel to the longest distance of the network without being degraded more than the error parameter $BER_{Thres}$. The method further goes on with step 3.

Step 3 is a power value convergence test performed for iterations. It can be a signal-by-signal power value convergence test or a test on the set of the power values of the respective signals. For example, it can be implemented by the formula $max_k|P_k^i - P_k^{i-1}| < \epsilon$ with a convergence criterion $\epsilon$. If the convergence test is negative, the incremental loop further goes on with step 4.

Step 4 is an initialization of a second loop that allows the process to deal with each optical signal k of the plurality of optical signals in turn (from 1 to N optical signals). After this initialization, the method further goes on with step 5 that selects the signal k. Then in step 6, the power value $P_k^1$ of the signal k in the iteration i is lowered of an increment $\delta P$ and becomes a lowered value $P_k^{1'}$. The method further goes on with a simulation step 7.

In the simulation step 7, the error parameter $BER_k^i$ of the signal k that has been lowered is estimated through numerical computations, e.g. electromagnetic simulations, as a function of: the new power value $P_k^{i'}$, the path length, i.e. the distance to propagate and the influence all the other signals that share one or more link with the lowered optical signal. The method further goes on with a test step 8.

Test step 8 compares the estimation of the error parameter $BER_k^i$ to the threshold $BER_{Thres}$. If the threshold is not overshot, the process goes on with step 107 as shown by arrow 105. Then in step 107, the lowered value $P_k^1$, is kept and becomes the power value $P_k^{i+1}$ of signal k at the next iteration. Conversely, the lowered

power value $P_k^i$, is not kept in the case that said error parameter $BER_k^i$ overshoot said threshold $BER_{Thres}$, as shown by arrow 104 leading to step 106. After one of the steps 106 or 107, the method further goes on with step 108.

Step 108 is an incremental step of the second loop in which the value of k is incremented. Then, the method further goes on test step 109 that tests if some signals remains that have not been selected. In the case that the signals have not been selected, the method further goes on with step 5 as shown by arrow 110 in order to select the following signal in the second loop. In the case that all the signals have been selected, the method further goes on with first loop incremental step 111 as shown by arrow 110. The method goes on with convergence test step 3 after this incremental step 111. If the convergence test of step 3 is positive, then process goes on with final step 103 as shown by arrow 101. The last iteration of first loop is then denoted end indice. In final step 103, the respective powers $P_k^{iend}$ are physically allocated to the respective optical signals k of the plurality of optical signals and the connections are established transparently for all connections with $BER_k \leq BER_{Thres}$. For all other connections, i.e. with $BER_k > BER_{Thres}$, the connection is established with regenerators wherever necessary.

In an embodiment, the power of a single connection is lowered and updated for each iteration. Namely one signal is selected at step 5 and the loop 112 is suppressed. In other embodiments, the process is implemented for a method of the signals to be deployed into the network, i.e. the loop 112 is performed for a given subset of the signals, whereas the power of the rest of the signals is set by some other process.

In embodiments, wavelength and path allocation can be done using any Routing and Wavelength Allocation algorithms. One can for instance route all optical signals of the connections along the shortest path or perform some load balancing (e.g. routing along least used path among k-shortest paths). Similarly wavelength allocation can be carried out through first-fit, random-fit or any other methods.

In embodiments, practical choices for initialized power value $P^0$ are either the power of the nonlinear threshold (NLT) under the assumption of fully loaded spectrum (as used in worst-case planning) or the NLT power for a single signal transmission (which is higher than optimal power under full-spectrum assumptions). The latter choice is beneficial in networks with a low number of connections as it allows the optical signals to benefit from the reach of a single-signal transmission.

The estimation of the Bit-Error-Rate BER can be carried out in various manners, e.g.:

Through semi-empirical models estimating the power of Self-Phase Modulation (SPM) and Cross-Phase modulation distortions (XPM) as a function of the number of traversed spans and power of optical signals as in O. Rival and K. Mheidly, "Accumulation Rate of Inter and Intra-channel Nonlinear Distortions in Uncompensated 100G PDM-QPSK Systems," in Optical Fiber Communication Conference, OSA Technical Digest (Optical Society of America, 2012), paper JW2A.52. It can indeed be shown that SPM distortions of channel $k$ on itself accumulates faster than linearly and scale with $P_k^3$ while distortions of a channel $j$ on channel $k$ accumulate approximately linearly and scale with $P_k P_j^2$ and with the inverse of the wavelength spacing between signals $j$ and $k$. The following data may be employed as input parameters for this model: the non-linear parameters $a_{SPM}$ and $a_{XPM}$, relative to the SPM and XPM non-linear effects respectively, that specify the medium (fiber) and power spectral profile. Such parameters have to be specified by measurements or simulations.

Through analytical models estimating the power of distortion created on each channel in each span as proposed in Pontus Johannisson, "Analytical Modeling of Nonlinear Propagation in a Strongly Dispersive Optical Communication System ", http://arxiv.org/abs/1205.2193 from the characteristics of the fiber and the power density spectrum of the signals propagating through the spans. The power of distortions generated in successive spans can then be summed assuming no correlation in distortions generated in successive spans. The following data may be employed as input parameters for this model: the non-linear parameter $a_{NL}$, relative to the whole non-linear effects, that specifies the medium (fiber) and power spectral profile. Such parameter has to be specified by measurements or simulations.

In the above embodiments, the Kerr effect has been presented as the main source of nonlinear impairments of the optical signals for the sake of simplicity. The optical Kerr effect can result in impairments on the optical signal for many reasons listed below: optical bistability, self-focusing effect, self-phase modulation, solitons formation and others.

Many other possible nonlinear effects from the list below may be taken into account: second order nonlinearities, second harmonic generation, frequency mixing, optical parametric amplification and oscillation, spontaneous parametric down conversion, sources of entangled photons based on SPDC, third order nonlinear effects as four-wave mixing, Raman scattering, spontaneous and stimulated Raman scattering, Raman amplification, Brillouin Scattering, two photons absorption and others.

In embodiments, the increment power value $\delta P$ of step 6 may be determined using the above BER estimation models and any single-variable equation numerical solver (e.g. through dichotomy, Newton's method, ...).

In embodiments, the increment power value $\delta P$ of step 6 may be a constant value.

In embodiments, the loop that selects the N signals in turn and processes calculations for these signals one by one can also be limited to select only a subset of the plurality of the signals in the network.

In embodiments, the loop that selects the N signals in turn and to process calculations can also process these calculations for these signals as a whole, or process calculations for subsets of the signals one by one.

The method described above is a numerical method. However, it may also be implemented as an experimental method according to the same steps.

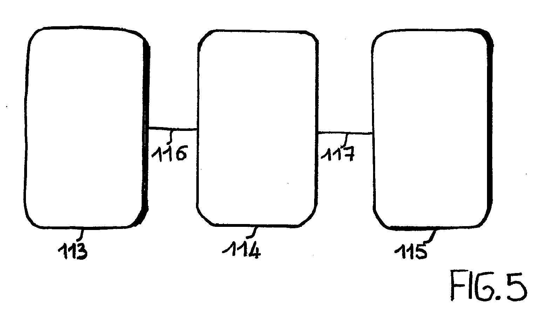

With reference to Figure 5, a computation device that may be employed to execute the methods described above includes a data repository 113 comprising the optical path properties of the network and a calculation unit 114 that is linked to the data repository 113 as shown by line 116. The calculation unit 114 is able to make the calculations by one of the method described above. The device further includes an output interface 115 that is linked to the calculation unit 114 as shown by line 117. In embodiment, the output interface is a voltage driver. In embodiments, the output interface may be connected to a data repository, a network interface, a printer and the like.

The computation device described hereinabove may be implemented through the use of dedicated hardware as well as hardware capable of executing software in association with appropriate software. When provided by a processor, the corresponding functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, central processing unit (CPU), digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

The computation device above described may be implemented in a unitary manner or in a distributed manner.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

**Claims**

1.  A method for setting the power of a plurality of optical signals (25, 26, 27, 28, 29) in an optical network (99), wherein each optical signal has a source node (A, B, C), a destination node (B, C, E), and an optical path from the source node to the destination node, wherein
    the optical paths of the optical signals are non-disjoint paths, wherein the optical signals are multiplexed in the non-disjoint paths, the method including:

    providing a dataset indicating optical path properties of the optical signals,
    allocating (2) an initial power value (23) for each optical signal of the plurality of optical signals,
    selecting a first optical signal (25),
    estimating (4) an error parameter of the selected optical signal at the destination node (C) of the selected optical signal by assuming a lowered power value of the selected optical signal,
    wherein the estimating comprises performing propagation calculation by a propagation model that considers nonlinear interactions between optical signals, wherein the propagation calculation deals with the transparent transmission of the plurality of optical signals along their optical paths from the source nodes to the destination nodes as a function of the optical path properties of the optical signals,
    allocating the lowered power value (44) to the selected optical signal in an updating step when the estimated error parameter meets an acceptance condition (31),
    selecting a second signal (26), and iterating to the step of estimating, and
    after at least the first and second optical signals have been selected, setting the power of each respective optical signal to match the up-to-date allocated power value.

2.  A method in accordance with claim 1, wherein the optical network is a WDM network and wherein the first and second optical signals have respective wavelength channels.

3.  A method in accordance with any one of claims 1 and 2, wherein the acceptance condition is met when the estimated error parameter is lower than a threshold error parameter.

4.  A method in accordance with claim 3, further comprising the step of determining the initial power value (32) by

selecting the optical signal (27) of the plurality of optical signals that has the longest optical path in the network, and for a set of power values (10),
estimating an error parameter (9) of the selected optical signal at the destination node of said selected optical signal by performing propagation calculation by a propagation model that considers nonlinear interactions between optical signals, wherein the propagation calculation deals with the transparent transmission of the plurality of optical signals along their optical paths from the source nodes to the destination nodes, under the assumption that each optical signal of the plurality of optical signals has an identical power value P
comparing the lowest value of the estimated error parameter to the threshold error parameter (31)
when the lowest value of the estimated error parameter is lower than or equal to the threshold error parameter,
selecting the power value (32) associated to the lowest error parameter in the other case, repeating the determination step by selecting the optical signal (25) of the plurality of optical signals that has an optical path length shorter than the optical path length of the previously selected optical signal.

5.  A method in accordance with any one of claims 1 to 4, further comprising the step of selecting (3) another optical signal and iterating to the step of estimating until all optical signals have been successively selected in the step of selecting, and wherein the setting of the power is done after all signals have been successively selected.

6.  A method in accordance with claims 5, further comprising:

    iterating to the step of selecting (3) the first optical signal, and
    after having selected each optical signal of the plurality of optical signals,
    testing (5) a convergence criterion of the power values, and,
    setting the power of the optical signal to match the updated power values obtained at the last iteration when the convergence criterion is fulfilled.

7.  A method in accordance with any one of claims 1 to 6, wherein the optical signals other than the selected optical signal are taken into account in the propagation calculation with a power value equal to the updated power value obtained at a current iteration.

8.  A method in accordance with any one of claims 1 to 6, wherein the optical signals other than the selected optical signal are taken into account in the propagation calculation with a power value equal to the updated power value obtained at a previous iteration.

9. A method in accordance with any one of claims 1 to 8, wherein the propagation model is a semi-empirical model.

10. A method in accordance with any one of claims 1 to 8, wherein the propagation model is an analytical model.

11. A method in accordance with any one of claims 1 to 10, wherein the error parameter is the Bit-Error-Rate.

12. A method in accordance with any one of claims 1 to 11, wherein the propagation model further considers spontaneous emission as a source of impairments of the plurality of optical signals.

13. A method in accordance with any one of claims 1 to 12, wherein the propagation model further considers the Kerr effect as a source of impairments of the plurality of optical signals.

14. A method in accordance with any one of claims 1 to 13, further comprising:

   detecting that the estimated error parameter of an optical signal of the plurality of optical signals does not meet the acceptance condition and inserting a regenerator on the path of said optical signal.

15. A device for computing the power values for a plurality of optical signals in a network, suitable for a network wherein each optical signal has a source node, a destination node, and an optical path from the source node to the destination node, wherein the optical paths of the optical signals are non-disjoint paths, wherein the first and second optical signals are multiplexed in the shared optical link, the device comprising a data repository storing optical path properties of the optical signals, the device comprising computation means adapted to perform:

   allocating an initial power value for each optical signal of the plurality of optical signals, selecting a first optical signal, estimating an error parameter of the selected optical signal at the destination node of the selected optical signal by assuming a lowered power value of the selected optical signal, wherein the estimating comprises performing propagation calculation by a propagation model that considers nonlinear interactions between optical signals, wherein the propagation calculation deals with the transparent transmission of the plurality of optical signals along their optical paths from the source nodes to the destination nodes as a function of optical path properties of the optical signals, allocating the lowered power value (44) to the selected optical signal in an updating step when the estimated error parameter meets an acceptance condition (31), selecting a second signal, and iterating to the step of estimating,

the device further comprising an output interface for providing the up-to-date allocated power value of each optical signal.

**Amended claims in accordance with Rule 137(2) EPC.**

1. A method for setting the power of a plurality of optical signals (25, 26, 27, 28, 29) in an optical network (99), wherein each optical signal has a source node (A, B, C), a destination node (B, C, E), and an optical path from the source node to the destination node, wherein
   the optical paths of the optical signals are non-disjoint paths, wherein the optical signals are multiplexed in the non-disjoint paths, the method including:

   providing a dataset indicating optical path properties of the optical signals, allocating (2) an initial power value (23) for each optical signal of the plurality of optical signals, selecting a first optical signal (25), estimating (4) an error parameter of the selected optical signal at the destination node (C) of the selected optical signal by assuming a lowered power value of the selected optical signal, wherein the estimating comprises performing propagation calculation by a propagation model that considers nonlinear interactions between optical signals, wherein the nonlinear interactions between optical signals are a function of the powers of the optical signals, wherein the propagation calculation deals with the transparent transmission of the plurality of optical signals along their optical paths from the source nodes to the destination nodes as a function of the optical path properties of the optical signals, allocating the lowered power value (44) to the selected optical signal in an updating step when the estimated error parameter meets an acceptance condition (31), selecting a second signal (26), and iterating to the step of estimating, and after at least the first and second optical signals have been selected, setting the power of each respective optical signal to match the up-to-date allocated power value.

2. A method in accordance with claim 1, wherein the optical network is a WDM network and wherein the first and second optical signals have respective wavelength channels.

3. A method in accordance with any one of claims 1 and 2, wherein the acceptance condition is met when the estimated error parameter is lower than a threshold error parameter.

4. A method in accordance with claim 3, further comprising the step of determining the initial power value (32) by

   selecting the optical signal (27) of the plurality of optical signals that has the longest optical path in the network, and for a set of power values (10),

   estimating an error parameter (9) of the selected optical signal at the destination node of said selected optical signal by performing propagation calculation by a propagation model that considers nonlinear interactions between optical signals, wherein the propagation calculation deals with the transparent transmission of the plurality of optical signals along their optical paths from the source nodes to the destination nodes, under the assumption that each optical signal of the plurality of optical signals has an identical power value P

   comparing the lowest value of the estimated error parameter to the threshold error parameter (31)

   when the lowest value of the estimated error parameter is lower than or equal to the threshold error parameter,

   selecting the power value (32) associated to the lowest error parameter

   in the other case, repeating the determination step by selecting the optical signal (25) of the plurality of optical signals that has an optical path length shorter than the optical path length of the previously selected optical signal.

5. A method in accordance with any one of claims 1 to 4, further comprising the step of selecting (3) another optical signal and iterating to the step of estimating until all optical signals have been successively selected in the step of selecting, and wherein the setting of the power is done after all signals have been successively selected.

6. A method in accordance with claims 5, further comprising:

   iterating to the step of selecting (3) the first optical signal, and

   after having selected each optical signal of the plurality of optical signals,

   testing (5) a convergence criterion of the power values, and,

   setting the power of the optical signal to match the updated power values obtained at the last iteration when the convergence criterion is fulfilled.

7. A method in accordance with any one of claims 1 to 6, wherein the optical signals other than the selected optical signal are taken into account in the propagation calculation with a power value equal to the updated power value obtained at a current iteration.

8. A method in accordance with any one of claims 1 to 6, wherein the optical signals other than the selected optical signal are taken into account in the propagation calculation with a power value equal to the updated power value obtained at a previous iteration.

9. A method in accordance with any one of claims 1 to 8, wherein the propagation model is a semi-empirical model.

10. A method in accordance with any one of claims 1 to 8, wherein the propagation model is an analytical model.

11. A method in accordance with any one of claims 1 to 10, wherein the error parameter is the Bit-Error-Rate.

12. A method in accordance with any one of claims 1 to 11, wherein the propagation model further considers spontaneous emission as a source of impairments of the plurality of optical signals.

13. A method in accordance with any one of claims 1 to 12, wherein the propagation model further considers the Kerr effect as a source of impairments of the plurality of optical signals.

14. A method in accordance with any one of claims 1 to 13, further comprising:

   detecting that the estimated error parameter of an optical signal of the plurality of optical signals does not meet the acceptance condition and inserting a regenerator on the path of said optical signal.

15. A device for computing the power values for a plurality of optical signals in a network, suitable for a network wherein each optical signal has a source node, a destination node, and an optical path from the source node to the destination node, wherein the optical paths of the optical signals are non-disjoint paths, wherein the first and second optical signals are multiplexed in the shared optical link, the device comprising a data repository storing optical path properties of the optical signals, the device comprising computation means adapted to perform:

allocating an initial power value for each optical signal of the plurality of optical signals,

selecting a first optical signal,

estimating an error parameter of the selected optical signal at the destination node of the selected optical signal by assuming a lowered power value of the selected optical signal,

wherein the estimating comprises performing propagation calculation by a propagation model that considers nonlinear interactions between optical signals, wherein the propagation calculation deals with the transparent transmission of the plurality of optical signals along their optical paths from the source nodes to the destination nodes as a function of optical path properties of the optical signals,

allocating the lowered power value (44) to the selected optical signal in an updating step when the estimated error parameter meets an acceptance condition (31),

selecting a second signal, and iterating to the step of estimating,

the device further comprising an output interface for providing the up-to-date allocated power value of each optical signal.

FIG.1

FIG.2

FIG.3

FIG.4

113    114    115

116    117

FIG.5

Europäisches
Patentamt

European
Patent Office

Office européen
des brevets

## EUROPEAN SEARCH REPORT

Application Number

EP 14 30 5514

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 662 995 A1 (HUAWEI TECH CO LTD [CN]) 13 November 2013 (2013-11-13) * paragraph [0002] * * paragraph [0004] * * paragraph [0009] * * paragraph [0020] - paragraph [0030]; figure 2 * * paragraph [0036] - paragraph [0039]; figure 4 * | 1-15 | INV. H04J14/02 H04B10/079 |
| Y | US 2004/042793 A1 (HACHIYA NOBUHIDE [JP] ET AL) 4 March 2004 (2004-03-04) * paragraph [0012] - paragraph [0015] * * paragraph [0021] - paragraph [0036]; figure 1 * * paragraph [0046] - paragraph [0063]; figures 4,5 * | 1-15 | |
| A | WO 2009/143888 A1 (ERICSSON TELEFON AB L M [SE]; ZSIGMOND SZILARD [HU]; PERENYI MARCELLI) 3 December 2009 (2009-12-03) * page 1, line 6 - line 9 * * page 4, line 25 - page 5, line 30 * * page 7, line 2 - page 11, line 22; figures 1a,1b,1c,1d,2 * | 1-15 | TECHNICAL FIELDS SEARCHED (IPC) H04J H04B |
| A | TIBOR CINKLER ET AL: "Traffic grooming and power level tuning for physical impairment constrained routing", TRANSPARENT OPTICAL NETWORKS, 2008. ICTON 2008. 10TH ANNIVERSARY INTERNATIONAL CONFERENCE ON, IEEE, PISCATAWAY, NJ, USA, 22 June 2008 (2008-06-22), pages 162-165, XP031306341, ISBN: 978-1-4244-2625-6 * the whole document * | 1-15 | |

The present search report has been drawn up for all claims

| Place of search | Date of completion of the search | Examiner |
|---|---|---|
| The Hague | 16 September 2014 | Roldán Andrade, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 30 5514

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2014

| Patent document cited in search report | | Publication date | Patent family member(s) | | Publication date |
|---|---|---|---|---|---|
| EP 2662995 | A1 | 13-11-2013 | CN | 102142903 A | 03-08-2011 |
| | | | EP | 2662995 A1 | 13-11-2013 |
| | | | US | 2014029937 A1 | 30-01-2014 |
| | | | WO | 2012130001 A1 | 04-10-2012 |
| US 2004042793 | A1 | 04-03-2004 | JP | 3934513 B2 | 20-06-2007 |
| | | | JP | 2004096242 A | 25-03-2004 |
| | | | US | 2004042793 A1 | 04-03-2004 |
| WO 2009143888 | A1 | 03-12-2009 | US | 2011116797 A1 | 19-05-2011 |
| | | | WO | 2009143888 A1 | 03-12-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Accumulation Rate of Inter and Intra-channel Nonlinear Distortions in Uncompensated 100G PDM-QPSK Systems. **O. RIVAL ; K. MHEIDLY.** Optical Fiber Communication Conference, OSA Technical Digest. Optical Society of America, 2012

- **PONTUS JOHANNISSON.** *Analytical Modeling of Nonlinear Propagation in a Strongly Dispersive Optical Communication System,* //arxiv.org/abs/1205.2193